# EUROPÄISCHE PATENTANMELDUNG

(11) **EP 3 489 533 A1**
(43) Veröffentlichungstag der Anmeldung: **29.05.2019**
(21) Anmeldenummer: 18199274.4
(22) Anmeldetag: 09.10.2018
(51) Int. Cl.: F16C 17/03

(54) **LAGERANORDNUNG SOWIE VERFAHREN ZUR VERDREHSICHEREN FIXIERUNG EINER WELLE INNERHALB EINER LAGERANORDNUNG**

(30) Priorität: 22.11.2017 DE 102017220874
(71) Anmelder: Siemens Aktiengesellschaft, 80333 München (DE)
(72) Erfinder: Sommer, Richard, 02826 Görlitz (DE)

(57) **Zusammenfassung**

Lageranordnung (1) umfassend wenigstens ein Lagergehäuse (2) und ein in dem Lagergehäuse (2) angeordnetes, aus mehreren Kippsegmenten (3,3') bestehendes, Radialkippsegmentlager (4) zur drehbaren Lagerung einer Welle (5). Das Radialkippsegmentlager (4) weist wenigstens ein Kippsegment (3') auf, das derart von außerhalb des Lagergehäuses (2) in Richtung der Welle (5) verschieb- und fixierbar ist, so dass die Welle (5) zwischen wenigstens zwei Kippsegmenten (3, 3') verdrehsicher innerhalb des Radialkippsegmentlagers (4) fixierbar ist. Darüber hinaus betrifft die Erfindung ein Verfahren zur verdrehsicheren Fixierung der Welle (5) innerhalb der Lageranordnung (1).

## Beschreibung

Die Erfindung betrifft eine Lageranordnung gemäß dem Oberbegriff des unabhängigen Patentanspruchs 1 sowie ein Verfahren zur verdrehsicheren Fixierung einer Welle innerhalb einer Lageranordnung gemäß dem Oberbegriff des unabhängigen Patentanspruchs 4.

Gattungsgemäße Lageranordnungen dienen zur radialen Lagerung von rotierenden Wellen. Beim Radialkippsegmentlager wird die Welle nicht vollständig vom Lager umschlossen sondern durch mehrere, in der Regel 3 bis 5, Kippsegmentlager gehalten, die je nach Belastung und Verwendungszweck des Lagers gleich oder ungleiche Umfangslängen aufweisen. Die Gleitflächen des Kippsegmentlagers sind dabei üblicher Weise kreiszylindrisch ausgebildet. Solche Kippsegmentlager sind aus dem Stand der Technik beispielweise aus der DE 10 2011 10 57 62 A1 hinlänglich bekannt.

Für den Transport der Lageranordnung bzw. einer Maschine mit einer derartigen Lageranordnung, muss die Welle innerhalb der Lageranordnung gesichert werden. Hierzu werden üblicher Weise Folien in das Radiallager eingesetzt um durch Spielüberbrückung die Welle im Lager zu verspannen. Hierzu muss das Lagergehäuse aufwendig abgedeckt werden. Zur Inbetriebnahme müssen die Folien dann wieder entnommen und das Lagerspiel eingestellt werden. Hierzu sind spezielle Kenntnisse über den Aufbau der Lagerung notwendig.

Ausgehend vom zuvor beschriebenen Stand der Technik ist es Aufgabe der Erfindung, eine Lageranordnung bereitzustellen, bei der eine einfache Fixierung der Welle in der Lageranordnung möglich ist. Des Weiteren ist es Aufgabe der Erfindung, ein Verfahren zur verdrehsicheren Fixierung einer Welle innerhalb einer Lageranordnung bereitzustellen.

Die Aufgabe wird hinsichtlich der Lageranordnung durch die Merkmale des unabhängigen Patentanspruchs 1 und hinsichtlich des Verfahrens zur verdrehsicheren Fixierung einer Welle innerhalb der Lageranordnung nach den Merkmalen des unabhängigen Patentanspruchs 4 gelöst.

Vorteilhafte Ausgestaltungen und Weiterbildungen, welche einzeln oder in Kombination miteinander einsetzbar sind, sind Gegenstand der Unteransprüche.

Die erfindungsgemäße Lageranordnung, umfassend wenigstens ein Lagergehäuse und ein in dem Lagergehäuse angeordnetes, aus mehreren Kippsegmenten bestehendes, Radialkippsegmentlager, zur drehbaren Lagerung einer Welle, zeichnet sich dadurch aus, dass zumindest ein Kippsegment des Radialkippsegmentlagers derart von außerhalb des Lagergehäuses in Richtung der Welle verschieb- und fixierbar ist, so dass die Welle zwischen wenigstens zwei Kippsegmenten verdrehsicher innerhalb des Kippsegmentlagers fixierbar ist. Durch das Verschieben wenigstens eines Kippsegmentes in Richtung der Welle, wird das Lagerspiel überbrückt und die Welle im Kippsegmentlager verspannt, so dass ein sicherer Transport ermöglicht wird. Dadurch, dass die Verschiebung der Kippsegmente in Richtung der Welle von außerhalb des Lagergehäuses durchgeführt werden kann, kann auf das bisherige aufwändige Aufdecken der Lageranordnung und das Einbringen der Folie zum Überbrücken des Lagerspiels verzichtet werden. Hierdurch vereinfacht sich die Transportsicherung der Welle innerhalb der Lageranordnung erheblich.

Eine Ausgestaltung der Erfindung sieht vor, dass die Verstellung und Fixierung des Kippsegmentes mittels wenigstens einer Verstellschraube erfolgt, welche von außerhalb des Lagergehäuses zugänglich ist. Durch die Verstellschraube kann die Klemmkraft exakt eingestellt werden, wodurch sichergestellt werden kann, dass es nicht aufgrund von zu großen Klemmkräften zu einer Beschädigung eines Kippsegmentes oder der Welle kommt. Die Klemmkraft kann dabei beispielsweise mittels eines Drehmomentschlüssels exakt vorgegeben werden.

Eine weitere Ausgestaltung der Erfindung sieht vor, dass das Kippsegment im Wesentlichen radial, bezogen auf die Längsachse des Radialkippsegmentkörpers, verschiebbar ist. Hierdurch erreicht man, dass das Kippsegment möglichst vollflächig an der Welle zum Anliegen kommt. Dadurch wird eine hohe Klemmkraft erreicht und Beschädigungen der Welle oder des Kippsegmentes weitgehend ausgeschlossen.

Das erfindungsgemäße Verfahren zur verdrehsicheren Fixierung einer Welle innerhalb einer Lageranordnung, wobei die Lageranordnung wenigstens ein Lagergehäuse und ein in dem Lagergehäuse angeordnetes, aus mehreren Kippsegmenten bestehendes, radial Kippsegmentlager zur drehbaren Lagerung der Welle umfasst, zeichnet sich dadurch aus, dass wenigstens ein Kippsegment in Richtung der Welle verschoben und derart fixiert wird, so dass die Welle zwischen wenigstens zwei Kippsegmenten verdrehsicher innerhalb des Radialkippsegmentkörpers fixiert ist.

Durch das Verschieben des Kippsegmentes in Richtung der Welle wird wie bereits beschrieben, das Lagerspiel überbrückt und es kommt zu einem Klemmen der Welle innerhalb des Kippsegmentlagers, wodurch die Welle innerhalb des Kippsegmentlagers sicher fixiert ist.

Eine Ausgestaltung des Verfahrens sieht vor, dass das Verschieben und Fixieren des wenigstens einen Kippsegmentes durch eine Verstellschraube erfolgt, welche von außerhalb des Lagergehäuses zugänglich ist. Über die Verstellschraube lässt sich die Klemmkraft besonders exakt einstellen und durch die Zugänglichkeit der Verstellschraube von außerhalb des Gehäuses ist ein aufwendiges Abdecken des Lagergehäuses, wie es bislang notwendig ist, nicht erforderlich. Hierdurch kann die Transportsicherung auf einfache und schnelle Weise erfolgen.

Zusammenfassend lässt sich sagen, dass durch die erfindungsgemäße Lageranordnung und das erfindungsgemäße Verfahren zur verdrehsicheren Fixierung einer Welle innerhalb einer Lageranordnung eine besonders einfache und schnelle Sicherung der Welle möglich wird. Sowohl für die Sicherung der Welle für den Transport, als auch für die nachfolgende Inbetriebnahme sind keine Personen mit speziellen Kenntnissen über den Aufbau der Lagerung notwendig. Die erfindungsgemäße Lageranordnung sowie das erfindungsgemäße Verfahren sind insbesondere für Industriedampfturbinen von großem Vorteil, da die erste Inbetriebnahme der Turbine häufig nicht an einem Ort stattfindet, welcher der spätere tatsächliche Aufstellungsort ist. Insbesondere für Industriedampfturbinen, welche für den Liquid Natural Gas Markt (LNG) vorgesehen sind, wäre eine solche Transportsicherung von großem Vorteil.

Nachfolgend werden anhand eines Ausführungsbeispiels weitere Vorteile der Erfindung erläutert.

Es zeigt:

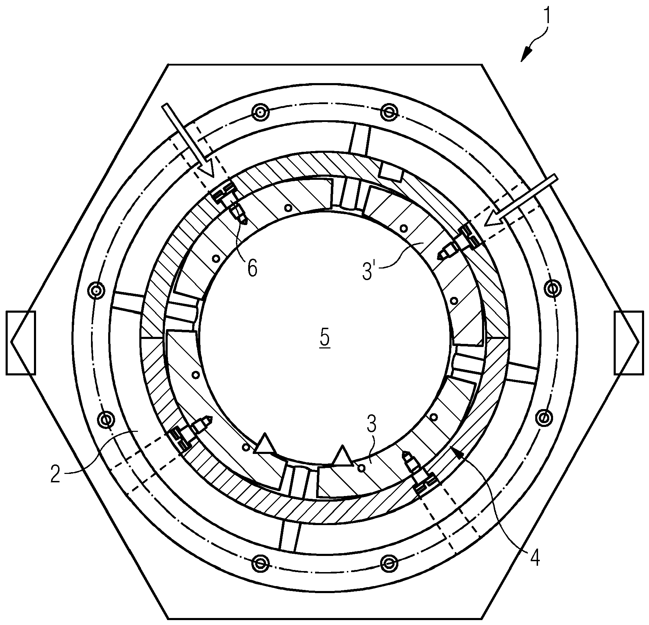

- Figur 1: einen Radialschnitt durch eine erfindungsgemäße Lageranordnung

Bei der Figur handelt es sich um eine stark vereinfachte Darstellung, bei der im Wesentlichen nur die zur Beschreibung der Erfindung notwendigen Bauteile gezeigt sind. Bei der Darstellung handelt es sich nicht zwangsweise um eine maßstabsgerechte Darstellung der Bauteile.

Figur 1 zeigt eine erfindungsgemäße Lageranordnung 1. Die Lageranordnung 1 umfasst ein Lagergehäuse 2 und ein in dem Lagergehäuse 2 angeordnetes, aus mehreren Kippsegmenten 3, bestehendes Radialkippsegmentlager 4 zur drehbaren Lagerung einer Welle 5. Die Welle 5 dreht sich um eine Drehachse, welche die axiale Richtung der Lageranordnung 1 definiert. Das Radialkippsegmentlager 4 besteht im Ausführungsbeispiel aus vier einzelnen Kippsegmenten 3. Zwei der vier Kipplagersegmente, bezeichnet als 3', sind von außerhalb des Lagergehäuses 2 in Richtung der Welle 5 verschieb- und fixierbar. Hierzu sind von außerhalb des Lagergehäuses 2 zugängliche Verstellschrauben 6 vorgesehen, durch die die Verstellung und Fixierung der Kippsegmente 3' erfolgt. Die Kippsegmente 3' sind dabei im Wesentlichen radial, bezogen auf die Längsachse des Radialkippsegmentlagers 4 verschiebbar. Hierdurch erreicht man, dass die Kippsegmente 3' beim Verschieben in Richtung der Welle 5 möglichst flächig an der Welle 5 zum Anliegen kommen. Um die Welle 5 transportsicher in der Lageranordnung 1 zu fixieren, können die verschiebbaren Kippsegmente 3' mit Hilfe der Verstellschrauben 6 in Richtung der Welle 5 verschoben und fixiert werden. Dabei wird das normalerweise bestehende Lagerspiel überbrückt und die Welle 5 wird zwischen wenigstens zwei Kippsegmenten 3, 3' verdrehsicher innerhalb des Radialkippsegmentlagers 4 fixiert. Mit Hilfe der Verstellschrauben 6 kann die notwendige Kraft zur Fixierung der Welle 5 zwischen den Kippsegmenten 3, 3' sehr fein reguliert und eingestellt werden, so dass Beschädigungen der Kippsegmente 3, 3' beziehungsweise der Welle 5 vermieden werden können und trotzdem genügend Klemmkraft aufgebracht wird, um ein Verschieben der Welle beim Transport sicher zu verhindern. Die benötigte Klemmkraft kann dabei vorzugsweise mit Hilfe eines Drehmomentschlüssels exakt eingestellt werden.

Durch die erfindungsgemäße Lageranordnung 1 ist es somit nicht mehr nötig, zum Transport und zur Sicherung der Welle 5 während des Transports zunächst das Lagergehäuse aufwendig abzudecken und das Lagerspiel mit Hilfe von Folien zu überbrücken. Auch das Entfernen der Folien am endgültigen Aufstellort, welches wiederum mit einem aufwendigen Aufdecken des Lagergehäuses verbunden ist, kann entfallen. Das Anbringen der Transportsicherung kann dabei auch durch weniger geschultes Personal erfolgen, welches keine grundlegenden Kenntnisse über den Aufbau der Lager haben muss. Durch die erfindungsgemäße Lageranordnung und das erfindungsgemäße Verfahren zur verdrehsicheren Fixierung einer Welle innerhalb einer Lageranordnung kann die Transportsicherung auf sehr viel einfachere Weise und in wesentlich kürzerer Zeit erfolgen. Hierdurch ergeben sich sowohl erhebliche Kostenvorteile als auch eine deutliche Zeitersparnis.

## Patentansprüche

1. Lageranordnung (1) umfassend wenigstens ein Lagergehäuse (2) und ein in dem Lagergehäuse (2) angeordnetes, aus mehreren Kippsegmenten (3, 3') bestehendes, Radialkippsegmentlager (4), zur drehbaren Lagerung einer Welle (5),
**dadurch gekennzeichnet, dass**
zumindest ein Kippsegment (3') des Radialkippsegmentlager (4) derart von außerhalb des Lagergehäuses (2) in Richtung der Welle (5) verschieb- und fixierbar ist, so dass die Welle (5) zwischen wenigstens zwei Kippsegmenten (3, 3') verdrehsicher innerhalb des Radialkippsegmentlager (4) fixierbar ist.

2. Lageranordnung (1) nach Anspruch 1,
**dadurch gekennzeichnet, dass**
die Verstellung und Fixierung des Kippsegments (3') mittels wenigstens einer Verstellschraube (6) erfolgt, welche von außerhalb des Lagergehäuses (2) zugänglich ist.

3. Lageranordnung (1) nach Anspruch 1 oder 2,
**dadurch gekennzeichnet, dass**
das Kippsegment (3') im Wesentlichen radial, bezogen auf die Längsachse des Radialkippsegmentlager (4), verschiebbar ist.

4. Verfahren zur verdrehsicheren Fixierung einer Wellen (5) innerhalb einer Lageranordnung (1), wobei die Lageranordnung (1) wenigstens ein Lagergehäuse (2) und ein in dem Lagergehäuse (2) angeordnetes, aus mehreren Kippsegmenten (3, 3') bestehendes, Radialkippsegmentlager (4), zur drehbaren Lagerung der Welle (5) umfasst,
**dadurch gekennzeichnet, dass**
wenigstens ein Kippsegment (3') in Richtung der Welle (5)verschoben und derart fixiert wird, so dass die Welle (5) zwischen wenigstens zwei Kippsegmenten (3, 3') verdrehsicher innerhalb des Radialkippsegmentlager (4) fixiert ist.

5. Verfahren zur verdrehsicheren Fixierung einer Wellen (5) innerhalb einer Lageranordnung (1),
**dadurch gekennzeichnet, dass**
verschieben und fixiern des wenigstens einen Kippsegment (3`) durch eine Verstellschraube (6) erfolgt, welche von außerhalb des Lagergehäuses (2) zugänglich ist.
